# EUROPÄISCHE PATENTSCHRIFT

(11) **EP 3 638 492 B1**
(45) Veröffentlichungstag und Bekanntmachung des Hinweises auf die Patenterteilung: **11.01.2023**
(21) Anmeldenummer: 18729459.0
(22) Anmeldetag: 13.06.2018
(51) Int. Cl.: B29C 70/50, B29K 101/12

(54) **BÄNDCHENFÖRMIGER KOMPOSITWERKSTOFF**
RIBBON-SHAPED COMPOSITE MATERIAL
MATIÈRE COMPOSITE EN BANDELETTE

(30) Priorität: 14.06.2017 EP 17175951
(43) Veröffentlichungstag der Anmeldung: 22.04.2020
(73) Patentinhaber: PHP Fibers GmbH, 63784 Obernburg (DE)
(72) Erfinder: SIEJAK, Volker, 47259 Duisburg (DE); VIETH, Christian, 63939 W rth (DE); FLACHENECKER, Andreas, 45276 Essen (DE); VOLTA, Stefan, 63784 Obernburg (DE)
(74) Vertreter: CPW GmbH
(86) Internationale Anmeldenummer: PCT/EP2018/065672
(87) Internationale Veröffentlichungsnummer: WO 2018/229136

(56) Entgegenhaltungen:
- DE-A1-102012 007 631
- FR-A1- 2 443 325
- GB-A- 2 237 583
- US-A- 5 234 757
- US-A- 5 827 460

## Beschreibung

Die Erfindung betrifft ein Verfahren zur Herstellung eines bändchenförmigen Kompositwerkstoffs und einen so erhaltenen Kompositwerkstoff.

Kompositwerkstoffe aus Verstärkungsfasern und Matrixmaterial sind allgemein bekannt. Bei der Herstellung solcher Kompositwerkstoffe wird in der Regel ein Matrixmaterial auf die Verstärkungsfasern aufgebracht, beispielsweise als Pulver, oder die Verstärkungsfasern werden zwischen zwei Lagen Matrixmaterial gelegt. Nachteilig bei der Aufbringung des Matrixmaterials mit Hilfe von Pulver ist, dass im fertigen Produkt häufig eine ungleichmäßige Verteilung des Matrixmaterials auf der Faser vorliegt. Bei der Verwendung von Lagen aus Matrixmaterial (beispielsweise Folien) ist es in der Regel so, dass das Matrixmaterial erwärmt wird, um die Verstärkungsfasern einzuschließen, wobei das flüssige Matrixmaterial über die Verstärkungsfasern hinaus fließt. Hierdurch entsteht ein Randbereich nur aus Matrixmaterial ohne Verstärkungsfasern, der in einem anschließenden Prozessschritt abgeschnitten werden muss.

Die Aufgabe der vorliegenden Erfindung war daher, ein Verfahren bereitzustellen, bei dem ein bändchenförmiger Kompositwerkstoff hergestellt werden kann, ohne dass Randbereiche nur aus Matrixmaterial entstehen, wodurch ein Abschneiden eines solchen Randbereichs überflüssig wird.

Die Aufgabe wird gelöst durch ein Verfahren zur Herstellung eines bändchenförmigen Kompositwerkstoffes, wobei mindestens eine Lage aus Verstärkungsfasern direkt zwischen zwei Lagen aus thermoplastischen Fasern angeordnet wird, wobei alle drei Lagen mit einem Druck von mindestens 2 bar und Hitze beaufschlagt werden, so dass die thermoplastischen Fasern schmelzen und die Verstärkungsfasern umschließen. Die Lage aus umschlossenen Verstärkungsfasern wird unter Druck abgekühlt, bis das thermoplastische Material nicht mehr fließfähig ist.

Die direkte Anordnung der mindestens einen Lage aus Verstärkungsfasern zwischen den zwei Lagen mit thermoplastischen Fasern bedeutet, dass die Lage aus Verstärkungsfasern im direkten Kontakt zu den thermoplastischen Fasern steht. Es liegt folglich keine weitere Lage aus einem anderen Material mehr zwischen den Verstärkungsfasern und den Lagen aus thermoplastischen Fasern.

Bei Erwärmung der Lagen (thermoplastische Faserlage, Lage aus Verstärkungsfasern, thermoplastische Faserlage) erfolgt die Höhe der Erwärmung abhängig von dem verwendeten thermoplastischen Material. Es versteht sich, dass ein Temperaturbereich gewählt wird, der die thermoplastischen Fasern fließ fähig macht, so dass ein Umschließen der Verstärkungsfasern möglich wird. Die Verstärkungsfasern sind von den zuvor geschmolzenen thermoplastischen Fasern umschlossen, wenn wenigstens 70% der Faseroberfläche, bevorzugt über 80 % und besonders bevorzugt etwa 100 %der Faseroberfläche, von dem thermoplastischen Matrixmaterial bedeckt sind.

Unter dem Begriff thermoplastische Fasern sollen beispielsweise Fasern, Filamente, Stapelfaser, Multifilamentfasern, Garne, Monofilamente oder Bändchengarne aus thermoplastischem Material verstanden werden.

Als thermoplastisches Material für die thermoplastischen Fasern ist jedes Material geeignet, dessen Schmelzbereich oder Schmelzpunkt nicht größer ist als 500 °C, bevorzugter nicht größer als 350 °C.

Die Erwärmung und die Abkühlung erfolgen unter Druck. Dabei ist klar, dass der Druck ebenfalls von den zu verwendeten Materialien abhängig ist. Der Druck ist so zu wählen, dass das flüssige thermoplastische Material gleichmäßig die Verstärkungsfasern bedeckt. Ist es gewünscht, dass auch innerhalb der Lage aus Verstärkungsfasern Matrixmaterial gelangt, so wird der Druck entsprechend erhöht. Der Druck bei der Abkühlung des Matrixmaterials sollte so eingestellt werden, dass das Matrixmaterial nicht weiter fließen kann, während der Abkühlungsphase. Es kann folglich bevorzugt sein, wenn der Druck während des Abkühlens geringer gewählt wird, als während der Phase, in der die Verstärkungsfasern mit dem Matrixmaterial umschlossen werden sollen.

Durch das vorgeschlagenen Verfahren ist es möglich, dass das thermoplastische Material nur die Oberfläche der Verstärkungsfasern umschließt und innerhalb der Lage aus Verstärkungsfasern eindringt, ohne dass es seitlich austritt. Bei bisher üblichen Verfahren erfolgte stets ein Austritt des Matrixmaterials, so dass es bei der Herstellung des Kompositwerkstoffs immer mindestens einen Randbereich nur aus Matrixmaterial gab. Dieser Randbereich musste in einem weiteren Verfahrensschritt entfernt werden, was das Verfahren des Stands der Technik aufwändiger macht. Zudem wird unnötig viel Matrixmaterial in den bisher bekannten Verfahren verbraucht, wenn ein solcher ungenutzter Randbereich entsteht.

In einer bevorzugten Ausführungsform wird die Druckbeaufschlagung im gesamten Herstellungsprozess bis zur Abkühlung kontinuierlich beibehalten. Das bedeutet, dass während des Erwärmens, des Aufschmelzens und der Abkühlung immer ein Druck, der größer ist als der normale Atmosphärendruck, auf den herzustellenden Kompositwerkstoff wirkt. Selbstverständlich kann der Druck verringert oder erhöht werden während der Herstellung und in Abhängigkeit der verschiedenen Herstellungsschritte (Aufschmelzen, Umschließen, Abkühlen). Vorzugsweise wird während des Aufschmelzens der thermoplastischen Fasern ein Druck von mindestens 2 bis etwa 20 bar, bevorzugter 2 bis 8 bar und ganz besonders bevorzugt von 2 bis 5 bar eingestellt.

Vorzugsweise wird während des Abkühlens der umschlossenen Verstärkungsfasern ein Druck von etwa 2 bis etwa 10 bar, bevorzugter 2 bis 5 bar und ganz besonders bevorzugt von 2 bis 3 bar eingestellt.

Die Angabe "etwa" soll so verstanden werden, dass eine Fehlertoleranz von +/- 3 % darin enthalten ist.

Erfindungsgemäß wird als thermoplastische Fasern für mindestens eine der beiden Lagen ein (thermoplastisches) Bändchengarn verwendet. Besonders bevorzugt weisen beide Lagen aus thermoplastischen Fasern dies als Bändchengarne auf. Unter einem Bändchengarne sollen insbesondere die Garne verstanden werden, wie sie in der internationalen Anmeldung WO 2013/117728 beschrieben sind.

Derartige Bändchengarne werden z.B. hergestellt durch ein Verfahren umfassend die folgenden Schritte:
a) Vorlegen eines Garnes aus Multifilamenten auf Basis Polyamid und/oder Polyester,
b) Aufspreizen des Garnes, dass nicht mehr als fünf Filamente übereinander liegen,
c) Fixieren des Garnes durch Ausbildung einer Matrix aus einem oder mehreren (geeigneten) Fixiermitteln,
d) Aufwickeln des fixierten Garnes, dadurch gekennzeichnet, dass das oder die Fixiermittel ausgewählt werden aus einer Gruppe bestehend aus Copolyamiden, Copolyestern und Silikonen sowie Mischungen oder Blends daraus.

In einer weiteren bevorzugten Ausgestaltung der Erfindung weist mindestens eine der zwei Lagen aus thermoplastischen Fasern als thermoplastische Fasern ein Multifilamentgarn auf. Besonders bevorzugt weisen beide Lagen als thermoplastische Fasern ein Multifilamentgarn auf. Ganz besonders bevorzugt bestehen beide Lagen im Wesentlichen vollständig aus einem thermoplastischen Multifilamentgarn. Im Wesentlichen vollständig meint, dass die Lagen zu etwa 95% bis 100% aus thermoplastischem Multifilamentgarn bestehen.

Die GB 2 237 583 offenbart ein Verfahren zur Herstellung eines bändchenförmigen Kompositwerkstoffs, wobei mindestens eine Lage aus Verstärkungsfasern direkt zwischen zwei Lagen aus thermoplastischen Fasern angeordnet sind, wobei alle Lagen mit einem Drucke und Hitze beaufschlagt werden, sodass die thermoplastischen Fasern zu einem thermoplastischen Material schmelzen, das die Verstärkungsfasern umschließt.

Durch die Wahl dieser Form kommt es im Laufe der Herstellung des Komposits zu einer deutlichen verbesserten Prozessstabilität.

Die Gründe dafür sind der besonders geringe Abstand und die reduzierte Bauschigkeit des thermoplastischen Bändchengarns zu den Verstärkungsfasern, sowie die sich daraus ergebenden kurzen Fließwege und den erhöhten Wärmeübergang.

Insbesondere wird durch die festgelegte Vorzugsrichtung der thermoplastischen Fasern sowie durch die Orientierung dessen Polymermoleküle in Faserrichtung, die durch den Schmelzpinnprozess eingestellt wird, das Fließverhalten senkrecht zu den Verstärkungsfasern der Verstärkungsfasern eingeschränkt und in Verstärkungsrichtung bevorzugt.

Damit führt die Bändchenform der thermoplastischen Fasern zu einer Verbesserung des Fließverhaltens, auch bereits ohne das Vorhandensein von thixotropen Additiven.

Vorzugsweise werden als thermoplastische Fasern, Fasern aus aliphatischen und teilaromatischen Polyamiden, Polyoxymethylen (POM), Polyestern, PEEK, PEN, POK, PP, PE oder PVC oder Gemischen hieraus verwendet.

Bevorzugt weisen die thermoplastischen Fasern thixotropische Additive auf.

Vorzugsweise werden als thixotropische Additive pyrogene Kieselsäure, Luvotix ^{®} HAT, Luvotix ^{®} AB, Luvotix ^{®} EAB, Luvotix ^{®} P 100 -15, BYK^{®}-405 BYK^{®}-420 oder BYK^{®}-425 verwendet.

Durch die Verwendung von thixotropischen Additiven kann, je nach verwendetem thermoplastischem Material, noch besser das Austreten des thermoplastischen Materials über den Bereich der Lage aus Verstärkungsfasern verhindert werden. Es soll klar sein, dass bereits ohne die thixotropischen Additive mit dem Verfahren gemäß Anspruch 1 der Austritt des Matrixmaterials und die Bildung eines verstärkungsfaserfreien Randbereichs verhindert werden kann. Die thixotropischen Additive können allerdings das Verfahren hinsichtlich Temperaturschwankungen oder Druckschwankungen, die sich auf das Matrixmaterial und dessen Fließfähigkeit auswirken, unempfindlicher machen.

In einer bevorzugten Ausgestaltung des Verfahrens werden als Verstärkungsfasern Glasfaser (Roving), Carbonfaser (Tow), Basaltfaser, Keramikfaser, Viskosefasern, Metallfasern oder Naturfaser oder Mischungen der genannten Fasern für die Lage aus Verstärkungsfasern verwendet. Vorzugsweise besteht die mindestens eine Lage aus Verstärkungsfasern aus etwa 60 bis 100%, bevorzugter aus 80 bis 95%, aus einer der genannten Fasern oder einer Mischung aus den genannten Fasern.

Besonders bevorzugt werden als Verstärkungsfaser Glasfaser verwendet, wobei die Glasfaser vorzugsweise eine Feinheit von 1200 bis 2400 tex hat.

Vorzugsweise besteht eine Lage aus thermoplastischen Fasern aus mindestens einer Schicht, vorzugsweise aus zwei Schichten aus thermoplastischen Multifilamentgarnen, die unidirektional angeordnet sind. Bei mehr als einer Schicht aus thermoplastischen Multifilamentgarnen sind die Schichten vorzugsweise unidirektional zueinander innerhalb der Lage angeordnet.

Bevorzugt besteht die mindestens eine Lage aus Verstärkungsfasern aus einer Schicht unidirektional angeordneter Verstärkungsfasern. Die Verstärkungsfasern werden bevorzugt vor der Umschließung mit dem thermoplastischen Material gespreizt. Auch bevorzugt ist, wenn die mindestens eine Lage aus Verstärkungsfasern aus mehr als einer Schicht aus unidirektional angeordneten Verstärkungsfasern besteht. Die unterschiedlichen Schichten können dabei unidirektional oder multiaxial zueinander angeordnet werden innerhalb der mindestens einen Lage aus Verstärkungsfasern.

Bevorzugt erfolgt das Aufschmelzen des thermoplastischen Garns im Verfahren in einem Temperaturbereich von etwa 160 bis etwa 350 °C.

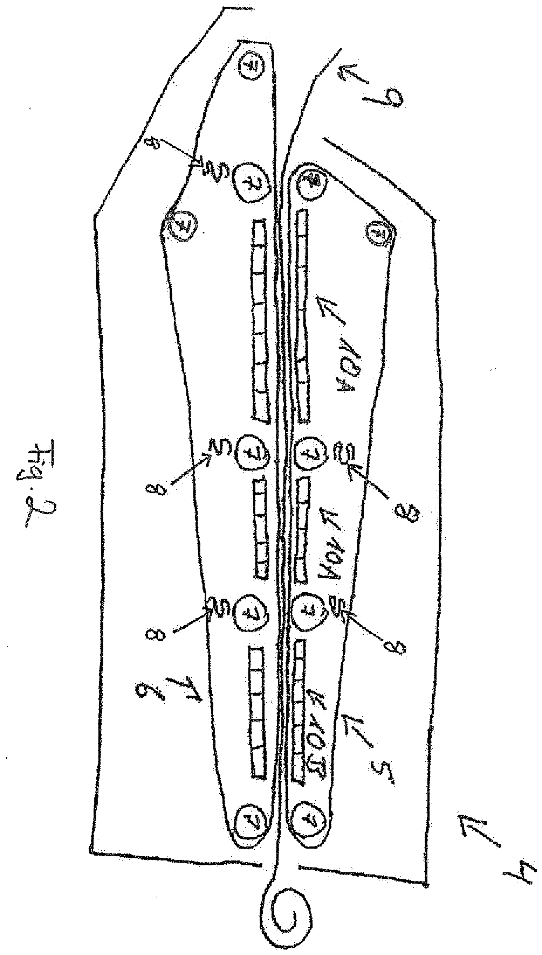

Vorzugsweise erfolgt das gesamte Verfahren zur Herstellung des bändchenförmigen Kompositwerkstoffs in einer Doppelbandpresse (siehe Figur 2).

Ein weiterer Gegenstand der Erfindung betrifft ein Kompositwerkstoff hergestellt nach dem Verfahren (mit oder ohne bevorzugte Ausführungsformen), wie eben beschrieben. Der durch das Verfahren hergestellte Kompositwerkstoff zeichnet sich dadurch aus, dass er eine Bändchenform aufweist, wobei sowohl in Querrichtung als auch in Längsrichtung des bändchenförmigen Kompositwerkstoffes dieser ein gleichbleibendes Verhältnis zwischen thermoplastischen Material und Verstärkungsfasern hat. Der Kompositwerkstoff weist folglich einen etwa gleichen Faservolumengehalt über die Breite und die Länge des bändchenförmigen Kompositwerkstoffes auf.

Unter einem gleichbleibenden Verhältnis zwischen thermoplastischen Material und Verstärkungsfasern ist gemeint, dass der bändchenförmige Kompositwerkstoff im Wesentlichen keine Bereiche aufweist, in denen nur Matrixmaterial oder nur Verstärkungsfaser vorliegen, sondern in etwa alle Bereiche des Kompositwerkstoffes immer ein in etwa gleiches Verhältnis von Verstärkungsfaser zu Matrixmaterial vorliegt. Es sein darauf hingewiesen, dass dieses gleichbleibende Verhältnis durch die Herstellung des bändchenförmigen Kompositwerkstoffs erreicht wurde und nicht durch zusätzliche Arbeitsschritte, wie beispielsweise das Entfernen von Randbereichen nur aus Matrixmaterial.

Die Erfindung wird anschließend anhand zweier Figuren näher beschrieben, wobei die Figuren nur mögliche Ausführungsformen der Erfindung darstellen.
Figur 1 (Figur 1A und Figur 1B) zeigt schematisch den Aufbau eines bändchenförmigen Kompositwerkstoffes vordem Verfahren zu dessen Herstellung und den fertigen bändchenförmigen Kompositwerkstoff.
Figur 2 zeigt schematisch eine Doppelbandpresse zur Herstellung des bändchenförmigen Kompositwerkstoffes.

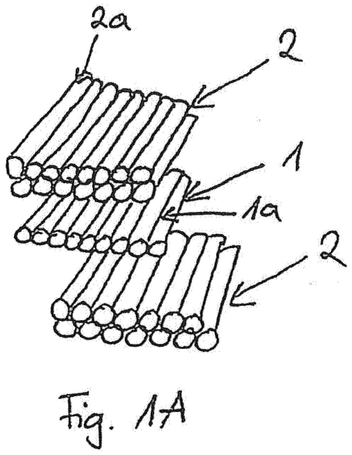

In Figur 1A ist schematisch eine Explosionsdarstellung des Aufbaus des zu fertigen bändchenförmigen Kompositwerkstoffs dargestellt. Mindestens eine Lage 1 aus Verstärkungsfasern 1a liegt direkt zwischen zwei Lagen 2 aus thermoplastischen Fasern 2a. Die Verstärkungsfasern 1a und die thermoplastischen Fasern 2a sind unidirektional angeordnet.

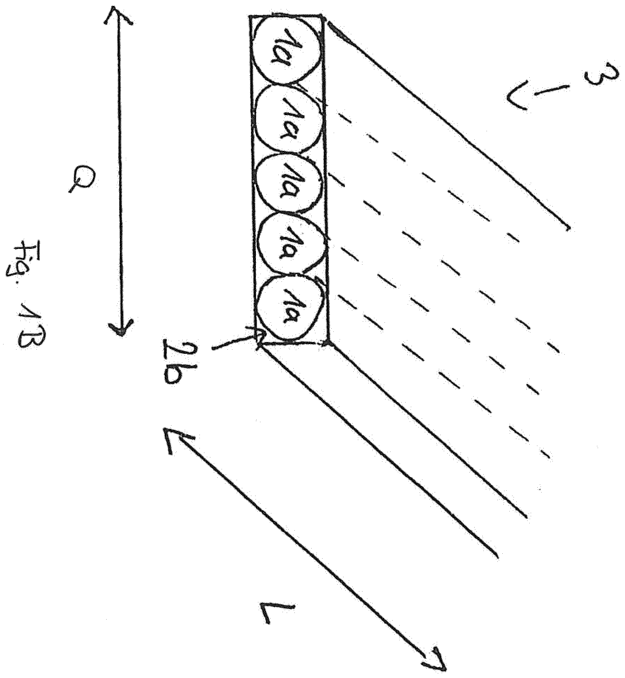

Figur 1B zeigt schematisch einen bändchenförmigen Kompositwerkstoff 3 so, wie er nach dem Verfahren aussehen soll. Die Lage 1 aus Verstärkungsfasern 1a ist im Wesentlichen vollständig von dem thermoplastischen Matrixmaterial 2b (oder auch thermoplastisches Material 2b) bedeckt, das durch die Aufschmelzung der thermoplastischen Fasern 2a entstanden ist. Ein Querschnitt zeigt, dass beide Oberflächen des bändchenförmigen Kompositwerkstoffes 3 von dem thermoplastischen Matrixmaterial 2b bedeckt sind, ohne dass thermoplastisches Matrixmaterial 2b über den Rand der Lage 1 aus Verstärkungsfasern 1a hinausgelaufen ist. Folglich hat der bändchenförmige Kompositwerkstoff 3 sowohl in Querrichtung (Pfeil Q) als auch in Längsrichtung (Pfeil L) ein etwa gleichbleibendes Verhältnis zwischen thermoplastischen Matrixmaterial 2b und Verstärkungsfasern 1a.

In Figur 2 ist schematisch eine Doppelbandpresse 4 dargestellt. Die Doppelbandpresse 4 weist zwei Transportbänder 5 und 6 auf, die mittels Umlenkrollen 7 geführt werden. Einige oder alle der Umlenkrollen 7 können mit Drucksystemen 8 (beispielsweise Federn) ausgestattet sein, so dass der Druck durch die Transportbänder 5 und 6 auf ein Material 9 weitergegeben werden kann. Die Doppelbandpresse 4 weist Thermoelemente 10 auf, durch die das Material 9 erwärmt oder gekühlt werden kann. Im vorliegenden Beispiel erfolgt durch die Thermoelemente 10 A eine Erwärmung des bändchenförmigen Kompositwerkstoffes 3 (das als Material 9 durch die Doppelbandpresse 4 geführt wird) bis die thermoplastischen Fasern 2 geschmolzen sind und eine thermoplastische Matrixlage 2b auf den Verstärkungsfasern 1a gebildet haben. Dann wird der bändchenförmige Kompositwerkstoff 3 durch das Thermoelement 10B gekühlt, bis die thermoplastische Matrixlage 2b nicht mehr fließfähig ist. Aus dem Aufbau der dargestellten Doppelbandpresse 4 wird deutlich, dass der Druck auf das Material 9 variabel einstellbar ist. Beispielsweise kann der Druck im Bereich der Thermoelemente 10A höher gewählt werden als der Druck im Bereich des Thermoelements 10B.

Vorzugsweise wird der Druck bei dem Schmelzen der thermoplastischen Fasern so gewählt, dass die Verstärkungsfasern durch die Erwärmung nicht schrumpfen. Das heißt, abhängig von dem Schmelzbereich des thermoplastischen Materials der thermoplastischen Fasern und der sich daraus ergebenen Temperatur und dem Material der Verstärkungsfasern wird ein Druck beim Aufschmelzen gewählt, um zu verhindern, dass die Verstärkungsfasern (auf Grund der Temperatur) schrumpfen. Dem Fachmann ist klar, dass dieser Druck abhängig ist von dem thermoplastischen Material und dem Material der Verstärkungsfasern.

## Patentansprüche

1. Verfahren zur Herstellung eines bändchenförmigen Kompositwerkstoffes (3), wobei mindestens eine Lage (1) aus Verstärkungsfasern (1a) direkt zwischen zwei Lagen (2) aus thermoplastischen Fasern (2a) angeordnet wird, von denen zumindest eine der zwei Lagen aus thermoplastischen Fasern (2A) ein Bändchengarn ist und wobei alle drei Lagen (1, 2) mit einem Druck von mindestens 2 bar und Hitze beaufschlagt werden, so dass die thermoplastischen Fasern (2a) zu einem thermoplastischen Material (2b) schmelzen, das die Verstärkungsfasern (1a) umschließt und wobei anschließend die Lage (1) aus umschlossenen Verstärkungsfasern (1a) unter Druck abgekühlt wird bis das thermoplastische Material (2b) nicht mehr fließfähig ist.

2. Verfahren nach Anspruch 1, **dadurch gekennzeichnet, dass** die Druckbeaufschlagung im gesamten Herstellungsprozess bis zur Abkühlung kontinuierlich beibehalten wird.

3. Verfahren nach einem der vorhergehenden Ansprüche, **dadurch gekennzeichnet, dass** die thermoplastischen Fasern (2a) mindestens einer Lage (2) ein Multifilamentgarn bilden.

4. Verfahren nach einem der vorhergehenden Ansprüche, **dadurch gekennzeichnet, dass** als thermoplastische Fasern (2a) aliphatische und teilaromatische Polyamiden, Polyoxymethylen (POM), Polyester, PEEK, PEN, Polyketon (POK), PP, PE oder PVC oder Gemische hieraus verwendet werden.

5. Verfahren nach einem der vorhergehenden Ansprüche, **dadurch gekennzeichnet, dass** die thermoplastischen Fasern (2a) thixotropische Additive aufweisen.

6. Verfahren nach Anspruch 5, **dadurch gekennzeichnet, dass** als thixotropisches Additive pyrogene Kieselsäure verwendet wird.

7. Verfahren nach einem der vorhergehenden Ansprüche, **dadurch gekennzeichnet, dass** als Verstärkungsfasern (1a) Glasfasern, Carbonfasern, Basaltfasern, Keramikfasern, Viskosefasern, Metallfasern oder Naturfasern oder Gemische hieraus verwendet werden.

8. Verfahren nach einem der vorhergehenden Ansprüche, **dadurch gekennzeichnet, dass** im Verfahren zur Aufschmelzung der thermoplastischen Fasern (2a) zum thermoplastischen Material (2b) ein Temperaturbereich von etwa 160 bis etwa 300°C verwendet wird.

9. Verfahren nach einem der vorhergehenden Ansprüche, **dadurch gekennzeichnet, dass** während des Aufschmelzen der thermoplastischen Fasern (2a) ein Druck von etwa 2-20 bar, vorzugsweise 2-8 bar und besonders bevorzugt 2-5 bar eingestellt wird.

10. Verfahren nach einem der vorhergehenden Ansprüche, **dadurch gekennzeichnet, dass** während des Abkühlens der umschlossenen Verstärkungsfasern (1a) ein Druck von etwa 2 bar bis etwa 10 bar, vorzugsweise von 2 bis 5 bar, besonders bevorzugt von 2 bis 3 bar eingestellt wird.

11. Verfahren nach einem der vorhergehenden Ansprüche, **dadurch gekennzeichnet, dass** das Aufschmelzen und Abkühlen in einer Doppelbandpresse (4) erfolgt.

12. Kompositwerkstoff (3), hergestellt nach einem Verfahren der Ansprüche 1 bis 11, wobei der Kompositwerkstoff (3) eine Bändchenform aufweist in der Verstärkungsfasern (1a) von einem thermoplastischen Material (2b) umschlossen sind, **dadurch gekennzeichnet, dass** der Kompositwerkstoff (3) in Bändchenform sowohl in Querrichtung (Q) als auch in Längsrichtung (L) ein etwa gleichbleibendes Verhältnis zwischen thermoplastischen Material (2b) und Verstärkungsfasern (1a) aufweist.

## Claims

1. Method for producing a strip-shaped composite material (3), wherein at least one layer (1) of reinforcing fibres (1a) is arranged directly between two layers (2) of thermoplastic fibres (2a), at least one of the two layers of thermoplastic fibres (2a) being a strip yarn, and wherein a pressure of at least 2 bar and heat are applied to all three layers (1, 2) such that the thermoplastic fibres (2a) melt to form a thermoplastic material (2b) that surrounds the reinforcing fibres (1a), and wherein the layer (1) of surrounded reinforcing fibres (1a) is subsequently cooled under pressure until the thermoplastic material (2b) is no longer capable of flowing.

2. Method according to claim 1, **characterised in that** the pressurisation is maintained continuously throughout the entire production process until the cooling.

3. Method according to any of the preceding claims, **characterised in that** the thermoplastic fibres (2a) of at least one layer (2) form a multifilament yarn.

4. Method according to any of the preceding claims, **characterised in that** aliphatic and partially aromatic polyamides, polyoxymethylene (POM), polyester, PEEK, PEN, polyketone (POK), PP, PE or PVC or mixtures thereof are used as thermoplastic fibres (2a).

5. Method according to any of the preceding claims, **characterised in that** the thermoplastic fibres (2a) comprise thixotropic additives.

6. Method according to claim 5, **characterised in that** fumed silica is used as a thixotropic additive.

7. Method according to any of the preceding claims, **characterised in that** glass fibres, carbon fibres, basalt fibres, ceramic fibres, viscose fibres, metal fibres or natural fibres or mixtures thereof are used as reinforcing fibres (1a).

8. Method according to any of the preceding claims, **characterised in that** a temperature range of about 160 to about 300°C is used in the method for melting the thermoplastic fibres (2a) to form the thermoplastic material (2b).

9. Method according to any of the preceding claims, **characterised in that** during the melting of the thermoplastic fibres (2a) a pressure of about 2-20 bar, preferably 2-8 bar and most preferably 2-5 bar is set.

10. Method according to any of the preceding claims, **characterised in that** during the cooling of the surrounded reinforcing fibres (1a) a pressure of about 2 bar to about 10 bar, preferably of 2 to 5 bar, most preferably of 2 to 3 bar, is set.

11. Method according to any of the preceding claims, **characterised in that** the melting and cooling takes place in a double belt press (4).

12. Composite material (3) produced according to a method of claims 1 to 11, wherein the composite material (3) has a strip shape in which reinforcing fibres (1a) are surrounded by a thermoplastic material (2b), **characterised in that** the composite material (3) in strip shape has an approximately constant ratio of thermoplastic material (2b) to reinforcing fibres (1a) both in the transverse direction (Q) and in the longitudinal direction (L).

## Revendications

1. Procédé de fabrication d'un matériau composite sous forme de bandelettes (3), dans lequel au moins une couche (1) en fibres de renforcement (1a) est agencée directement entre deux couches (2) de fibres thermoplastiques (2a), au moins une des deux couches de fibres thermoplastiques (2A) étant un fil ruban et dans lequel les trois couches (1, 2) sont soumises à une pression d'au moins 2 bars et à de la chaleur, de telle sorte que les fibres thermoplastiques (2a) fondent pour former un matériau thermoplastique (2b) qui entoure les fibres de renforcement (1a), et dans lequel la couche (1) de fibres de renforcement (1a) enfermées est refroidie sous pression jusqu'à ce que le matériau thermoplastique (2b) ne soit plus apte à l'écoulement.

2. Procédé selon la revendication 1, **caractérisé en ce que** l'application de pression est maintenue en continu pendant tout le processus de fabrication jusqu'au refroidissement.

3. Procédé selon l'une des revendications précédentes, **caractérisé en ce que** les fibres thermoplastiques (2a) d'au moins une couche (2) forment un fil multifilament.

4. Procédé selon l'une des revendications précédentes, **caractérisé en ce que** sont utilisés comme fibres thermoplastiques (2a) des polyamides aliphatiques et partiellement aromatiques, du polyoxyméthylène (POM), du polyester, de la PEEK, du PEN, de la polycétone (POK), du PP, du PE ou du PVC ou des mélanges de ceux-ci.

5. Procédé selon l'une des revendications précédentes, **caractérisé en ce que** les fibres thermoplastiques (2a) présentent des additifs thixotropes.

6. Procédé selon la revendication 5, **caractérisé en ce que** de l'acide silicique pyrogéné est utilisé comme additif thixotrope.

7. Procédé selon l'une des revendications précédentes, **caractérisé en ce que** sont utilisées comme fibres de renforcement (1a) des fibres de verre, des fibres de carbone, des fibres de basalte, des fibres de céramique, des fibres de viscose, des fibres métalliques ou des fibres naturelles, ou des mélanges de celles-ci.

8. Procédé selon l'une des revendications précédentes, **caractérisé en ce qu'**une plage de température d'environ 160 à environ 300°C est utilisée dans le procédé de fusion des fibres thermoplastiques (2a) pour former le matériau thermoplastique (2b).

9. Procédé selon l'une des revendications précédentes, **caractérisé en ce qu'**une pression d'environ 2 à 20 bars, de préférence de 2 à 8 bars et le plus préférentiellement de 2 à 5 bars est réglée lors de la fusion des fibres thermoplastiques (2a).

10. Procédé selon l'une des revendications précédentes, **caractérisé en ce qu'**une pression d'environ 2 bars à environ 10 bars, de préférence de 2 à 5 bars, le plus préférentiellement de 2 à 3 bars, est réglée lors du refroidissement des fibres de renforcement (1a) enfermées.

11. Procédé selon l'une des revendications précédentes, **caractérisé en ce que** la fusion et le refroidissement surviennent dans une presse à double bande (4).

12. Matériau composite (3), fabriqué selon un procédé des revendications 1 à 11, dans lequel le matériau composite (3) présente une forme de bandelettes dans laquelle des fibres de renforcement (1a) sont entourées d'un matériau thermoplastique (2b), **caractérisé en ce que** le matériau composite (3) sous forme de bandelettes tant dans la direction transversale (Q.) que dans la direction longitudinale (L), présente un rapport sensiblement constant entre le matériau thermoplastique (2b) et les fibres de renforcement (1a).
